# EUROPEAN PATENT SPECIFICATION

(11) **EP 4 564 317 B1**
(45) Date of publication and mention of the grant of the patent: **14.10.2026**
(21) Application number: 23307111.7
(22) Date of filing: 01.12.2023
(51) Int. Cl.: G06V 30/142, G06V 30/18, G06V 30/32

(54) **DEVICE AND METHOD FOR PROCESSING HANDWRITING INPUT WITH STROKE PREDICTION**
VORRICHTUNG UND VERFAHREN ZUR VERARBEITUNG VON HANDSCHRIFTLICHEN EINGABEN MIT SCHLAGANFALLVORHERSAGE
DISPOSITIF ET PROCÉDÉ DE TRAITEMENT D'ENTRÉE D'ÉCRITURE MANUSCRITE AVEC PRÉDICTION DE TRAIT

(43) Date of publication of application: 04.06.2025
(73) Proprietor: MyScript, 44339 Nantes Cedex 3 (FR)
(72) Inventor: AUJAY, Guillaume, 44339 NANTES (FR)
(74) Representative: RVDB Nantes

(56) References cited:
- CN-A- 110 531 875
- US-A1- 2017 177 146

## Description

### Technical field

The present disclosure relates generally to the field of processing handwriting input on computing devices and concerns in particular computing devices and methods for processing handwriting input that needs to be displayed as digital ink.

### Background

Handwriting input is a fundamental mode of human-computer interaction with extensive applications, including note-taking, drawing, document annotation, and more. The demand for efficient handwriting recognition and rendering on computing devices has experienced significant growth.

A problem that has been negatively impacting display of handwriting on computing devices is latency, i.e. the delay that occurs between the user's input and the corresponding display on the screen. This latency problem can vary in magnitude and is closely tied to the technical features of both the input device and the display unit in use. Excessive latency is perceptible to users and leads to a disconcerting perception of unresponsiveness, significantly diminishing the user experience. In extreme cases, a noticeable gap or blank may appear on screen between a stroke being drawn and the user's current input position. This problem of latency is particularly detrimental in applications where real-time feedback and accuracy are critical.

Additionally, input devices and display units can exhibit a wide variety of technical features and configurations. These disparities in terms of resources (hardware and software) have a strong impact on the capabilities of these devices to process, and render on display, handwriting input. Input devices, for example, can offer varying levels of responsiveness, dependent on factors such as whether they belong to an older or more recent generation, or whether they are designed as low-end or high-end products. The same applies to display units, where differences in features such as refresh rates and resolutions are commonplace, dictated by various factors such as the age, conception and quality of the device.

The magnitude of the latency issue is thus exacerbated by these technical variations, and users can perceive the input device and display unit as sluggish in their responses when this delay is excessive. This phenomenon significantly disrupts the user experience and can deter users from effectively utilizing digital ink input methods.

To mitigate latency-related issues, some processing systems have implemented prediction algorithms. These algorithms are designed to anticipate the user's intended input and render a predicted stroke on the screen. This, in turn, creates the illusion of a more responsive system, effectively bridging the gap between input and display. However, these known prediction algorithms are not without their challenges and limitations.

Conventional prediction algorithms, while effective in specific scenarios, do not consistently provide accurate and reliable point predictions. In practice, they can introduce errors, including artifacts, where points appear unexpectedly on the screen, and overshoots, where the predicted ink extends beyond the user's actual input position. These inaccuracies and errors may vary depending on various factors, such as the user's handwriting style, and thus negatively impact the user experience. In particular, the performance of prediction algorithms in terms of stability and spatial accuracy varies widely depending on the user's unique handwriting style. CN110531875A (SHENZHEN VPANEL TECH CO LTD) 3 December 2019 (2019-12-03) and US2017/177146A1 (SKALJAK BOJAN [US] ET AL) 22 June 2017 (2017-06-22) constitute prior art.

### Summary of the invention

An object of the present invention is to solve at least one of the disadvantages or deficiencies of the technological background.

Another object of the present invention is to render handwriting display on various computing devices more responsive and accurate, regardless of the specific resources (hardware and/or software) of the device in use.

Another object of the present invention is to reduce or eliminate the problem of latency for any computing devices used for inputting and displaying handwriting input.

The examples of the present invention that are described herein below provide computing devices, methods and corresponding computer programs for processing handwriting comprising strokes of digital ink.

According to a first aspect, the invention provides a method implemented by a computing device for processing handwriting comprising strokes of digital ink, each stroke comprising at least one point, said method comprising:
- registering (S2) of a plurality of first points (PT1) as motion events;
- displaying (S4), as a first stroke portion (ST1a), second points (PT1a) comprising at least part of the registered first points while at least one other registered first point (PT1b), so-called third point is not yet displayed due to latency between said 10 registering and displaying;
- determining (S6) an integer N1 of the most recent first points (PT1c) registered over a predetermined time window (WD1), said most recent first points comprising at least one displayed second point (PT1a) and at least one non-displayed third point (PT1b);
- computing a confidence score based at least on a curvature score representative of a curvature of the N1 most recent first points;
- setting, based on the confidence score, an integer N2 defining a prediction window; and
- controlling a dynamic prediction process as a function of the integer N2, comprising:
   ∘ if N2 ≥ 1, predicting as a stroke prediction, based on features of the N1 most recent first points, N2 next points that are expected to be displayed subsequently to the N1 most recent first points.

In a particular embodiment, the method further comprises: displaying a second stroke portion defined by the predicted N2 next points.

In a particular embodiment, said controlling the prediction process further comprises: if N2 = 0, deactivating stroke prediction so that no next point is predicted based on features of the N1 most recent first points.

In a particular embodiment, the computing of the confidence score comprises:
- determining the curvature based on respective positions of the N1 most recent first points; and
- setting the curvature score to reflect said curvature so that the curvature score is inversely correlated to the curvature.

In a particular embodiment, the curvature score is set with a predetermined range value, the curvature score being inversely proportional to the curvature.

In a particular embodiment, the computing of the confidence score comprises:
- if the curvature reaches a first threshold value or more, the curvature score is set to a minimum value, thereby limiting or deactivating stroke prediction in the dynamic prediction process.

In a particular embodiment, the confidence score is computed based on the curvature score in combination with at least one of:
- a speed score representative of a speed of the motion events defined by the N1 most recent first points; and
- an acceleration score representative of an acceleration of the motion events defined by the N1 most recent first points.

In a particular embodiment, the confidence score is computed based on a product of the curvature score with at least one of the speed score and the acceleration score.

In a particular embodiment, the computing of the confidence score comprises:
- if the speed equals to a second threshold value or less, the speed score is set to a minimum value, thereby limiting or deactivating stroke prediction in the dynamic prediction process.

In a particular embodiment, the computing of the confidence score comprises:
- if the acceleration equals to a third threshold value or more, the acceleration score is set to a minimum value, thereby limiting or deactivating stroke prediction in the dynamic prediction process.

In a particular embodiment, in the stroke prediction of the dynamic prediction process, the N2 next points are predicted by an extrapolation based on the N1 most recent first points.

In a particular embodiment, the extrapolation is a linear extrapolation based on an average velocity computed on the N1 most recent first points.

According to a second aspect, the present invention relates to a computer readable program code (or computer program) including instructions for executing the steps of the method of the first aspect of the invention.

The different steps of the method of the first aspect may thus be defined by computer program instructions of a computer program. This computer program may be capable of being implemented in a computing device as defined hereafter, or more generally in a computer, this computer program comprising instructions adapted to the implementation of the steps of the method of the first aspect of the invention.

The computer program of the invention can be expressed in any programming language, and can be in the form of source code, object code, or any intermediary code between source code and object code, such that in a partially-compiled form, for instance, or in any other appropriate form.

According to a third aspect, the invention relates to a computing device configured to perform the method of the first aspect of the invention. In a particular embodiment, the invention relates to a computing device for processing handwriting comprising strokes of digital ink, each stroke comprising at least one point, said device comprising:
- a registering module for registering a plurality of first points (PT1) as motion events;
- a displaying module for displaying, as a first stroke portion (ST1a), second points (PT1a) comprising at least part of the registered first points while at least one other registered first point (PT1b), so-called third point, is not yet displayed 25 due to latency between said registering and displaying;
- a determining module for determining an integer N1 of the most recent first points (PT1c) registered over a predetermined time window (WD1), said most recent first points comprising at least one displayed second point (PT1a) and at least one non-displayed third point (PT1b);
- a computing module for computing a confidence score based at least on a curvature score representative of a curvature of the N1 most recent first points;
- a setting module for setting, based on the confidence score, an integer N2 defining a prediction window; and
- a prediction module for controlling a dynamic prediction process as a function of the integer N2, comprising:
   if N2 ≥ 1, predicting as a stroke prediction, based on features of the N1 most recent first points, N2 next points that are expected to be displayed subsequently to the N1 most recent first points.

The various embodiments defined above in connection with the method of the first aspect of the present invention apply in an analogous manner to the computing device, the computer program and the non-transitory computer readable medium of the present invention.

For each step of the method of the present invention as defined in the present disclosure, the computing device may comprise a corresponding module (or unit, or means) configured to perform said step.

In a particular embodiment, the invention may be implemented using software and/or hardware components. In this context, the term "module" can refer in this disclosure to a software component, as well as a hardware component or a plurality of software and/or hardware components.

The present invention advantageously allows for a more responsive handwriting processing and display on various computing devices, regardless of the specific resources (hardware and/or software) of the device in use. Thanks to the invention, the problem of latency can be reduced or eliminated for any computing device, irrespective of its configuration and capabilities. By dynamically controlling a prediction process, stroke prediction can be performed in an accurate and reliable manner, thereby offering a smoother and more efficient experience to the user. In particular, it is possible to adapt point prediction, or even deactivate it selectively, to ensure accurate and reliable display of handwriting input in any situation. The invention can ensure good stability in successive predicted motion events (no shakiness or wriggle) and minimal special distance between predicted motion events and actual future ones (e.g. no overshoot). Errors, such as artefacts, overshoots and the like, can thus be advantageously avoided, thereby improving the user experience.

### Brief description of the drawings

Other characteristics and advantages of the present disclosure will appear from the following description made with reference to the accompanying drawings which show embodiments having no limiting character. In the figures:
- figure 1 is a block diagram which schematically represents a computing device according to at least one particular embodiment of the invention;
- figure 2 schematically represents handwriting input processed by the computing device of figure 1, according to at least one particular embodiment of the invention;
- figure 3 is a block diagram which schematically represents the computing device of figure 1, according to at least one particular embodiment of the invention;
- figure 4 depicts steps of a method for processing handwriting, according to at least one particular embodiment of the invention;
- figures 5 to 8 schematically represent processing of handwriting input by the computing device of figure 1 at different steps of the method of figure 4, according to at least one particular embodiment of the invention; and
- figure 9 schematically represents point prediction applied to handwriting input by the computing device of figure 1, according to at least one particular embodiment of the invention.

The components in the figures are not necessarily to scale, emphasis instead being placed upon illustrating the principles of the present invention.

For simplicity and clarity of illustration, the same reference signs will be used throughout the figures to refer to the same or analogous parts, unless indicated otherwise.

### Description of particular embodiments of the invention

In the following detailed description, numerous specific details are set forth by way of examples in order to provide a thorough understanding of the relevant teachings. However, it should be apparent to those skilled in the art that the present teachings may be practiced without such details. In other instances, well known method, procedures, and/or components are described at a relatively high-level, without detail, in order to avoid unnecessarily obscuring aspects of the present teachings.

The following description of the exemplary embodiments refers to the accompanying drawings. The following detailed description does not limit the invention. Instead, the scope of the invention is defined by the appended claims. In various embodiments as illustrated in the figures, a computing device, a corresponding method and a corresponding computer program are discussed.

The terms "first(s)" (or first(s)), "second(s)", etc.) are used in this document by arbitrary convention to help identify and distinguish between different features (such as operations, elements, etc.) implemented in the embodiments described below.

The terms "hand-drawing" and "handwriting" (and similarly the terms "hand-drawn" and "handwritten") are used interchangeably herein to define the creating of digital contents (handwriting input) by a user through use of his/her hands (or fingers) or any input device (hand-held stylus or digital pen, mouse...) on or with an input surface. The term "pen", "hand" or the like is used herein to provide concise description of the input techniques, however the use of other means or other parts of a user's body (such as foot, mouth and eye for similar input) is included in this definition.

Handwriting, or a handwritten content, are formed by strokes of digital ink inputted by a user using any appropriate input means. A stroke (also called ink stroke or ink segment) is characterised by at least a stroke initiation location (corresponding to a "pen down" event), a stroke terminal location (corresponding to a "pen up" event), and the stroke path connecting the stroke initiation and the stroke terminal locations.

A handwritten content in the present disclosure is understood as comprising one or multiple symbols (or characters), or a part thereof, created by a user through a process of handwriting. Handwriting input may for instance comprise text, such as characters and the like (e.g. alphanumeric characters), or strings thereof, in any written language and, more generally, any symbol, or part thereof, used in written text. More generally, content handwritten by a user may comprise any handwritten shape formed by at least one stroke of digital ink.

Furthermore, the examples described below and shown in the drawings are in a left-to-right written language context, bearing in mind that any reference to positions can be adapted for written languages having different directional formats.

The present invention provides a method, and a corresponding computing device and computer program, for processing handwriting, and more particularly for processing handwriting comprising strokes of digital ink, wherein each stroke comprise at least one point. The invention involves adapting an integer N2 based on a confidence score and controlling a dynamic prediction process as a function of this integer N2, thereby adapting whether and how point prediction is performed.

In particular, the method may comprise:
- registering first points as motion events;
- displaying, as a first stroke portion, second points comprising at least part of the first points;
- determining an integer N1 of the most recent first points registered over a predetermined time window;
- computing a confidence score based at least on a curvature score representative of a curvature of the N1 most recent first points;
- setting, based on the confidence score, an integer N2 defining a prediction window; and
- controlling a dynamic prediction process as a function of the integer N2, comprising:
   ∘ if N2 ≥ 1, predicting as a point prediction, based on features of the N1 most recent first points, N2 next points that are expected to be displayed subsequently to the N1 most recent first points.

The present invention advantageously allows performing point prediction in an accurate and reliable manner, thereby avoiding errors on display and improving the user experience.

Other aspects and advantages of the present invention will be apparent from the embodiments described below with reference to the drawings mentioned above.

In the present disclosure, the terms "stroke prediction" and "point prediction" can be used interchangeably as they refer to the same concept. Stroke prediction refers to a technique designed to anticipate and improve the recognition of handwritten content while it is being inputted on a computing device. By performing stroke prediction, it is possible to predict next points that a user is expected to input on a computing device and thus to cause early display of these points as strokes to improve the responsiveness of the device. As these predicted points form or define predicted strokes or stroke portions, point prediction amounts to stroke prediction, and inversely.

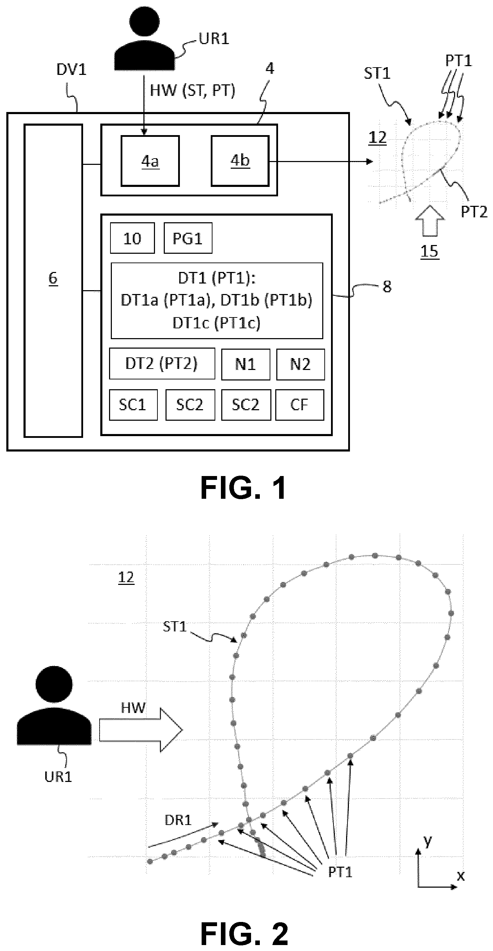

**Figure 1** depicts a computing device DV1 configured to process handwriting HW according to particular embodiments. In the following, it is assumed that the computing device DV1 is used to process and display a content HW, handwritten by a user UR1, by implementing a processing method according to particular embodiments of the invention. The handwriting HW may comprise one or multiple strokes ST of digital ink, each stroke ST comprising at least one point PT. Each stroke ST may form a full character, part of a character, or a plurality of characters.

For illustrative purpose only, it will be assumed that the handwriting HW comprises a stroke ST1 (figure 1) in the shape of a loop, said stroke ST1 comprising a plurality of points PT1, named first points. **Figure 2** schematically illustrates this stroke ST1 inputted by the user UR1 on the computing device DV1. As shown, it is assumed that the user UR1 inputs the stroke ST1 in a forward direction DR1, this stroke comprising the first points PT1 which are registered by the computing device DV1 over time. Each point T1 may be associated with a temporal information defining an instant of input of said point. The temporal information of the points PT1 thus defines a temporal sequence of input of the first points PT1, and more globally of the stroke ST1, over time.

The computing device (or processing device) DV1 may be a computer desktop, laptop computer, tablet computer, e-book reader, mobile phone, smartphone, wearable computer, digital watch, interactive whiteboard, global positioning system (GPS) unit, enterprise digital assistant (EDA), personal digital assistant (PDA), game console, or more generally any processing unit suitable to process handwritten content according to the method of the invention. The computing device DV1 may include components of at least one processing elements, some form of memory and input and output (I/O) devices. The components communicate with each other through inputs and outputs, such as connectors, lines, buses, links networks, or others known to the skilled person.

More specifically, the computing device DV1 may comprise a user interface 4 comprising an input surface 4a for handwriting a content, such as handwriting HW. The input surface 4a is suitable to detect, or register, a plurality of points forming one or more strokes ST, such as stroke ST1 (figures 1-2). Embodiments without such an input surface 4a are however also possible.

The input surface 4a may employ any appropriate technology such as resistive, surface acoustic wave, capacitive, infrared grid, infrared acrylic projection, optical imaging, dispersive signal technology, acoustic pulse recognition, or any other appropriate technology as known to the skilled person to receive user input in the form of a touch- or proximity-sensitive surface. The input surface 4a may be a non-touch sensitive surface which is monitored by a position detection system.

The handwriting HW may or may not be generated by means of the computing device DV1. In a particular example, the computing device DV1 is configured to retrieve the handwriting HW from an internal memory or from outside. In another example, the user UR1 inputs the handwriting HW using the computing device DV1, for instance by means of the input surface 4a. More generally, the computing device DV1 comprises means for registering (or detecting) the handwriting HW inputted by the user UR1.

The computing device DV1 may comprise at least one display unit (or display device) 4b configured to display, or render, handwriting such as the content HW handwritten by the user UR1. The display unit 4b may comprise a screen or the like of any appropriate technology (LCD, plasma...). The display unit 4b is suitable to display strokes ST of digital ink inputted by the user UR1. This display unit 4b may be internal or external to the computing device DV1.

The input surface 4a may be co-located with the display unit 4b or remotely connected thereto. In a particular example, the input surface 4a and the display unit 4b are parts of a touchscreen.

As depicted in figure 1, the computing device DV1 comprises at least one processor 6 and a memory 8. The computing device DV1 may also comprise one or more volatile storing elements (RAM, not shown) as part of the memory 8 or separate thereof.

The processor 6 is a hardware device for executing software, particularly software stored in the memory 8. The processor 8 can be any custom made or general purpose processor, a central processing unit (CPU), a semiconductor based microprocessor (in the form of microchip or chipset), a microcontroller, a digital signal processor (DSP), an application specific integrated circuit (ASIC), field programmable gate array (FPGA) or other programmable logic device, or any combination thereof, and more generally any appropriate processor component designed for executing software instructions as known to the skilled person.

The memory 8 is or comprises a non-transitory (or non-volatile) computer readable medium (or recording medium) in accordance with a particular embodiment of the invention. The memory 8 may include any combination of non-volatile storing elements (e.g. ROM, EPROM, flash PROM, EEPROM, hard drive, magnetic or optical tape, memory registers, CD-ROM, WORM, DVD, or the like). The memory 8 may also comprise volatile memory (RAM). The memory 8 is coupled to the processor 6, so that the processor 6 is capable of reading information from and writing information to the memory 8.

As show in the example of figure 1, the memory 8 includes an operating system (OS) 10 and a computer program (or application) PG1. The operating system 10 controls the execution of the computer program PG1. This computer program (or computer-readable program code) PG1 comprises instructions to implement a processing method according to particular embodiments of the invention, as further described below. The memory 8 thus constitutes a recording medium (or information medium) according to particular embodiments of the present invention, having stored thereon the computer program PG1.

As shown in figure 1, the memory 8 may store various data used for implementing the processing method of the invention, according to particular embodiments. In particular, the computing device DV1 may collect and store point data DT1 representative of the first points PT1 inputted by the user UR1, for instance by means of the user surface 4a or any appropriate user interface. The point data DT1 may define various features of the points PT1 forming the handwriting inputted by the user UR1, i.e. the strokes ST1 in this particular case (figures 1-2). In other words, the point data DT1 define a digital representation of the handwriting HW comprising a stroke ST1 of digital ink, this stroke comprising the first points PT1.

As described further below, the points PT1 registered by the computing device DV1 cannot be displayed instantly on the display unit 4b. Once registered by the computing device DV1, a delay is necessary to trigger display of the point data DT1. This delay, referred as latency, strongly depends on various technical features of the computing device DV1 in use, such as its hardware and software configurations and capabilities. Accordingly, at any given time, the registered first points PT1 may comprise second points PT1a that are being displayed and third points PT1b that have not been displayed yet. These displayed and non-displayed points PT1a and PT1b, defined respectively by point data DT1a and DT1b, are thus part of the first points PT1 and differ by the fact that they have, or not have yet, being rendered on display.

To compensate or correct this problem of latency, the computing device DV1 is configured to control a dynamic prediction process 15 (figure 1), as further described below. As part of this dynamic prediction process, the computing device DV1 may adaptively control stroke prediction, or adaptively activate or deactivate stroke prediction, as a function of a degree of confidence in predicting next points PT2 that are expected to be displayed subsequently to the registered points PT1, that is, subsequently to the already-displayed second points PT1a and not-yet-displayed third points PT1b.

The memory may also store second point data DT2 defining next points PT2 predicted by stroke prediction, as well as integer N1 and N2, a curvature score SC1 (possibly also other scores SC2 and/or SC3), and a confidence score CF. The nature and use of the above-cited parameters and features will be more apparent in the following description of the processing method implemented by the computing device DV1 according to particular embodiments.

As shown in **figure 2** according to a particular embodiment, when running the computer program PG1 stored in the memory 8 (figure 1), the processor 6 may implement modules, namely: a registering module MD2, a display module MD4, a determining module MD6, a computing module MD8, a setting module MD10 and a prediction module MD12.

The registering module MD2 may be configured to register (or detect) first points PT1 as motion events.

The displaying module MD4 may be configured to display, as a first stroke portion, second points PT1a comprising at least part of the first points PT1.

The determining module MD6 may be configured to determine an integer N1 of the most recent first points PT1, more specially named PT1c (figure 1), registered over a predetermined time window.

The computing module MD8 may be configured to compute a confidence score CF based at least on a curvature score SC1 representative of a curvature of the N1 most recent first points PT1c.

The setting module M10 may be configured to set (or determine), based on the confidence score, an integer N2 defining a prediction window; and

The prediction module MD12 may be configured to control a dynamic prediction process as a function of the integer N2. This dynamic prediction process comprises: if N2 ≥ 1, predicting as a stroke prediction, based on features of the N1 most recent first points PT1, N2 next points PT2 that are expected to be displayed subsequently to the N1 most recent first points PT1c.

The computer program PG1 comprises instructions configuring the processor 6 to implement the above-mentioned modules MD2-MD12, in order to perform steps of the processing method of the invention, as described later in particular embodiments.

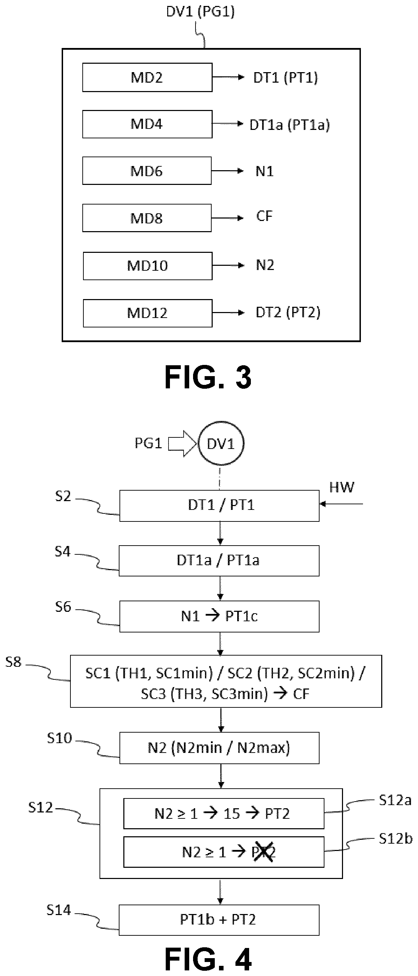

The configuration and operation of the modules MD2-MD12 of the computing device DV1 will be more apparent in the particular embodiments described hereinbelow with reference to the **figures 4-9****.** It is to be understood that the modules MD2-MD12 as shown in figure 3 represent only an example embodiment of the present invention, other implementations being possible.

For each step of the processing method of the present invention, the computing device DV1 may comprise a corresponding module configured to perform said step.

A processing method implemented by the previously discussed computing device DV1 of **figures 1-3** is now described with reference to **figures 4-9****,** in accordance with particular embodiments of the present invention. More specifically, the computing device DV1 implements this method by executing the computer program PG1 stored in the memory 8.

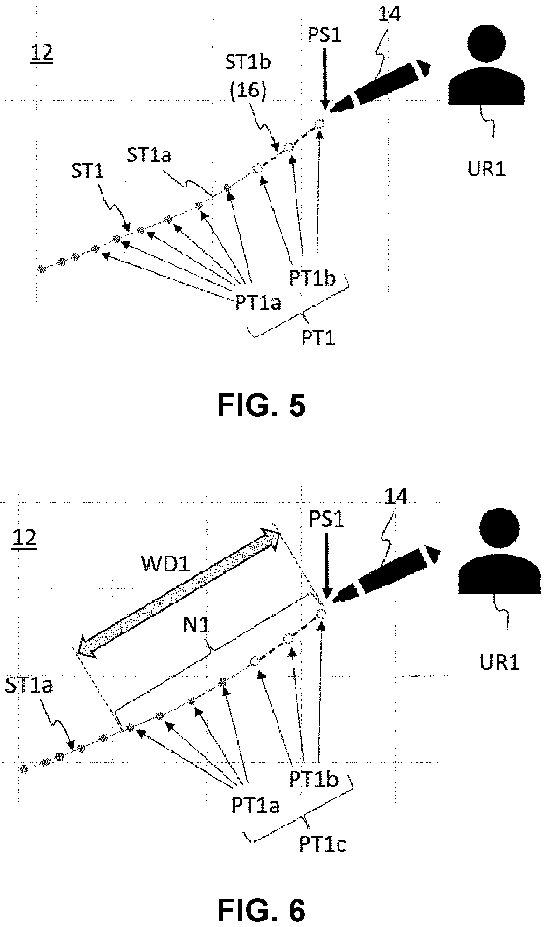

In the following, it is assumed that a user UR1 is using the computing device DV1 to handwrite a stroke ST1, for instance in an electronic document 12 (figure 1). In other words, the handwriting HW that is being inputted by the user UR1 comprises the stroke ST1. To this end, the user UR1 defines for instance an input position PS1 with an input instrument 14 (e.g., a stylus, a finger, or the like) on the input surface (figure 6). This input position PS1 corresponds to a contact point that moves over time while the stroke ST1 is being drawn by the user UR1.

In a registering step S2 (**figures 1** and **4****-5**), the computing device DV1 registers first points PT1 as motion events. These first points PT1 are detected by the computing device DV1, by means of the input surface 4a, as a sequence of discrete points over time. As part of this registering step S2, first point data DT1 are collected and stored in the memory 8, these data DT1 being representative of the first points PT1 that define the stroke ST1 being inputted.

The first point data DT1 determined by the computing device DV1 may define various features of the first points PT1, such as positions of these points (e.g. x and y coordinates) and possibly also associated timestamps (or temporal information) defining an input time of each first point PT1. The first points PT1 define motion events in the sense that these points represent respective positions (or coordinates) where the writing instrument 14 has made contact or moved relative to the input surface 4a.

In this context, the first points PT1 may be sampled by the computing device DV1 at regular intervals according to a sampling rate, and the relative positions between consecutive points PT1 may be used to define the trajectory of the motion (or gesture), allowing the device to interpret the user's handwriting as a series of connected motion events. Based on these motion events, the computing device DV1 can track the movement of the user's handwriting input and convert it into meaningful digital ink, including the stroke ST1 in this example.

In a displaying step (figures 4-5), the computing device DV1 displays, as a first stroke portion ST1a, second points PT1a comprising at least part of the first points PT1. In other words, some of the first points PT1 previously registered in the registering step S2 are displayed in the displaying step S4 as second points PT1a while others are not. The non-displayed points PT1 are more specifically named third points PT1b. This is because display of the registered points PT1 require processing, and thus time, and is also limited by some technical features of the computing device DV1 such as the refresh rate according to which display is performed. As a result, the computing device DV1 exhibits a latency, that is, an inherent delay between registering the user input and displaying the user input on the display unit 4a.

The second points PT1a that are being displayed (S4) at a current time may correspond to the most ancient ones among the registered first point PT, i.e. the ones associated with the earliest input time, as there was more time to process and display these points.

As shown in **figure 5****,** it is assumed by way of an example that the second points PT1a form a first stroke portion ST1a that is rendered (S4) on display while the non-displayed (third) points PT1b form a second portion ST1b that has not been displayed yet at the current time. The first points PT1 thus comprise the second points PT1a on display and the other points PT1b which have been registered but are yet to be displayed.

As a result of this latency, a gap (or space, or void) may be perceptible to the user UR1 between the current position PS1 of the user's input instrument 14 and the first stroke portion ST1a (figure 5). As already explained, this gap or delay may cause confusion to the user and may lead to a disconcerting perception of unresponsiveness, significantly diminishing the user experience. In some cases, a noticeable gap or blank 16 may appear on screen between the stroke portion ST1a being drawn and the user's current input position PS1. This problem of latency is particularly detrimental in applications where real-time feedback and accuracy are critical.

In a determining step S6 (**figures 4** and **6**), the computing device DV1 determines an integer N1 of the most recent first points PT1 registered over a predetermined time window WD1. These most recent first points PT1, more specifically named PT1c, are those among the first points PT1 that were registered the latest in the registering step S2, that is, the most recent motion events registered within the predetermined time period WD1. These most recent points PT1c have already been processed by the processor 6 (figure 1) for the purpose of the registration S2 but these points PT1c are still to be displayed by the display unit 4b. As already mentioned, this latency in displaying registered points may be due to various factors such as the refresh rate and/or other features of the display unit 4b.

An aim of this determining step S6 is to assessing the speed and acceleration according to which the stroke ST1 is being drawn by the user UR1. The faster the processing of handwriting, the higher is the number N1 of most recent points PT1c identified within the time window WD1. As explained further below, it allows adapting stroke prediction depending on the user's behaviour and handwriting style.

In a particular example, the computing device DV1 may define a shifting time window WD1 **(****figure 6****),** i.e. a time period of a predetermined time length that shifts (or slides) over time so that it ends at a current input position PS1 to encompass the most recent ones among the registered first points PT1. By way of an example, the time length of this time window WD1 may be set at 100 or 200 milliseconds, although other configurations may of course be contemplated. The computing device DV1 may thus count and determine as the integer N1 the number of first points PT1 registered within that time window WD1, that is, the number of first points PT1 associated with a timestamp falling within that time window WD1. In doing so, the computing device DV1 may analyse the point data DT1 of the registered first points PT1 to determine how many of these first points PT1 belongs to this time window WD1 at a current time. As shown in figures 1 and 4, the N1 most recent points PT1c are defined by the point data DT1c stored as part of point data DT1.

As shown in **figure 6****,** due to the above-mentioned latency phenomenon, the most recent points PT1c found within the predetermined time window WD1 comprise at least one (second) point PT1a that is already on display and at least one (third) point PT1b that has been registered but not displayed yet. In the present example, it is assumed that the most recent points PT1c belonging to the time window WD1 comprise a plurality of displayed points PT1a and a plurality of not-yet-displayed (third) points PT1b.

As shown in **figure 6****,** it is assumed by way of an example that each not-yet-displayed (third) point PT1b is part of the N most recent points PT1c. In other words, each third point PT1b which has been registered but not displayed is recognised as a most recent point PT1c.

In a computing step S8 **(****figures 4** and **6****),** the computing device DV1 computes a confidence score CF based at least on a curvature score SC1 representative of a curvature of the N1 most recent first points PT1c. In other words, the confidence score CF determined in S8 is function of a curvature formed by the most recent first points PT1c, that is, a curvature of the motion events defined by the N1 most recent first points PT1c. The confidence score CF reflects a degree of confidence in predicting next points PT2 that are expected to be displayed subsequently to the most recent points PT1c.

In the computing step S8, the computing device DV1 may analyse the relative positions of the most recent first points PT1c to determine a curvature of a stroke portion formed by these points PT1c (this stroke portion being partly displayed and partly not displayed). The curvature score SC1 may be computed in various ways depending on each case. For instance, a curvature score SC1 may be a single curvature value representative of the curve or stroke portion formed by a plurality of points PT1c (e.g. a curvature mean) or may comprise a plurality of curvature values or curvature components at various positions among the most recent first points PT1c.

In a particular example, the computing device DV1 determines (S8) the curvature formed by the N1 most recent first points PT1c based on the relative positions of these points PT1c by calculating the change in direction or angle between these points. To assess curvature, the device DV1 may examine the angular change along the path of the points PT1c. A sharper changes in direction indicates a higher curvature, while a more gradual transition suggests a lower curvature. This computation may involve vector mathematics, such as calculating the angle between adjacent line segments formed by the points. By quantifying these angular changes, the device DV1 can compute a curvature score SC1 which is representative of the curvature of the N1 most ancient first points PT1c. The confidence score CF may then be computed as a function of the curvature score SC1.

The curvature score SC1 may be computed in various ways depending on the case. In a particular example, the computing S8 (figure 4) of the confidence score CF comprises:
- determining the curvature (or absolute curvature) based on respective positions of the N1 most recent first points PT1c; and
- setting the curvature score SC1 to reflect said curvature so that, the curvature score SC1 is inversely correlated to the curvature (or absolute curvature).

Applying an inverse correlation (or inverse relationship) between the curvature score SC1 and the curvature means that that the higher the curvature is, the lower the curvature score SC1, and conversely. The curvature score SC1 may for instance be set within a predetermined value range (e.g. between 0 and 1) so as to be inversely correlated to the curvature within that value range.

In a particular example, the curvature score SC1 is set so that it is inversely proportional to the curvature of the N1 most recent first points PT1c.

By way of an example, the computing device DV1 determines absolute curvatures at each most recent first point PT1c based on respective positions of the points. A curvature score SC1 is calculated for each most recent point PT1c based on its respective absolute curvature such that, the higher the absolute curvature, the lower the curvature score SC1. The curvature score SC1 obtained for each most recent point PT1c may be normalised so that it ranges from a minimum value (e.g., value "0") to a maximum value (e.g., value "1").

In a particular example, if the curvature reaches a minimum threshold value or below (e.g. 0,05), then the curvature score SC1 is set to a maximum value (e.g. SC1 = 1).

In a particular example, if the curvature reaches a maximum threshold TH1 or above (e.g. 0,1), then the curvature score SC1 is set to a minimum value SC1min (e.g. SC1 = 0). It is thus possible to efficiently control the way stroke prediction is performed.

In a particular example, a single curvature value is computed (S8) based on the curve formed by the N1 most recent first points PT1c (more precisely formed in the period during which these points PT1c have been registered). A new curvature value may be computed iteratively at each refresh rate while the handwriting HW is being registered.

In a particular example, the curvature score SC1 is computed based on a Menger curvature of the N1 most recent points PT1c. This Menger curvature (named after Austrian mathematician Karl Menger) is a measure of curvature at a specific point on a continuous curve in a Euclidean space (i.e. in space x/y in the electronic document 12). It is defined as the reciprocal of the radius of the osculating circle, which is the circle that best approximates the curve at that point. This allows quantifying the curvature locally, offering relevant information on the shape and behaviour of a motion event (e.g. a curved motion) at a specific point.

For instance, a 3-points Menger curvature may be computed based on the curve formed by the N1 most recent first points PT1c (S8). To this end, three points are selected among the N1 most recent first points PT1c, e.g. the most recent one among the points PT1c, an intermediate point which is at a position corresponding to X/2 points prior to the most recent point PT1c, and an initial point which is at a position corresponding to X points prior to the most recent point PT1c, where X is an index determined based on the input rate of the computing device DV1. The position and number of the points PT1c used for determining the curvature score SC1 may be adapted. By way of an example, 10 most recent points PT1c are selected (S6) in the last Y ms and the computing device DV1 calculates (S8) the curvature score SC1 based on the 1st, 5th and 10th point PT1c, ignoring the rest of the points PT1c for the purpose of curvature score calculation.

The curvature score SC1 and the confidence score CF may have various values depending on the case. In the following, it is assumed that the curvature score SC1 and the confidence score CF are respectively a curvature factor and a confidence factor, where both of these factors are normalised to exhibit a respective value comprised between 0 and 1, although other variants are possible.

In a particular example, the curvature score SC1 and the confidence score CF are positively correlated to each other so that the higher the curvature score SC1, the higher the confidence score CF, and conversely.

In a particular example, the curvature score SC1 and the confidence score CF may be computed by linear, or quadratic, interpolation between a predefined minimum threshold and a predefined maximum threshold.

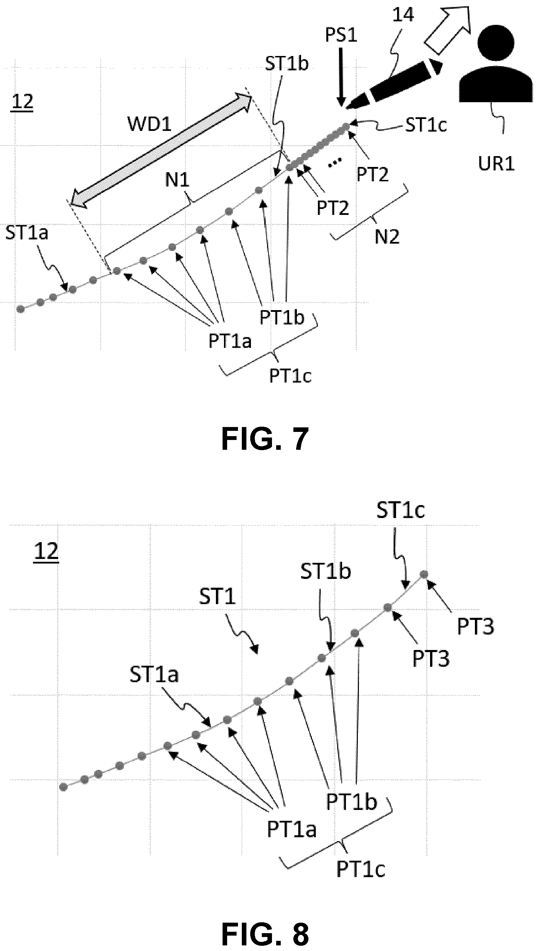

In a setting step S10 **(****figures 4** and **7**), the computing device DV1 sets (or determines), based on the confidence score CF, an integer N2 defining a prediction window. This integer N2 may be set so that N2 = 0 or N2 ≥ 1. N2 represents a number of next points PT2 that are to be predicted by stroke prediction.

In a particular example, the integer N2 is positively correlated to the confidence score CF so that the higher the confidence score CF, the higher the integer N2 and conversely.

In a particular example, the integer N2 is set to be comprised between a minimum value N2min and a maximum value noted N2max. These values N2min and N2max can be user configured. It is assumed hereinafter that the minimum value N2min = 0, although other configurations are possible. For instance, if the confidence score CF indicates 100% confidence (or above a maximum threshold), then the integer N2 can be set to the maximum value N2max. Inversely, if the confidence score indicates 0% confidence (or below a minimum threshold), then the integer N2 can be set to the minimum value N2min.

In a controlling step S12 **(****figures 4** and **7**), the computing device DV1 controls a dynamic prediction process 15 as a function of the integer N2 determined in the setting step S10. If N2 ≥ 1, the dynamic prediction process 15 comprises predicting as a stroke prediction, based on features of the N1 most recent first points PT1c, N2 next points PT2 that are expected to be displayed (or received as input) subsequently to the N1 most recent first points PT1c. In other words, if N2 ≥ 1, point prediction is activated so as to predict the number N2 of next points PT2 which are expected to succeed to the N1 most recent first points (more precisely, to succeed to the third points PT1b which are part of the most recent points PT1c). Stroke prediction may thus be performed based on the N2 most recent first points PT1c which include the third points PTb and at least part of the second points PT1a.

If stroke prediction is performed as part of the dynamic prediction process (N2 ≥ 1), the N2 next points PT2 may be predicted based on various techniques, such as for instance by an extrapolation based on the N1 most recent first points PT1c (e.g. based on the respective positions of these points PT1c). These predicted points PT2 may be computed using for instance a simple linear extrapolation (as shown by the straight line of next points extrapolation in figure 7). Experimental tests have showed that linear extrapolation provides good stability with minimal latency and side-effects. Other extrapolation methods are however possible, such as Google's Kalman filter output for instance.

In a particular example, the stroke prediction is performed by linear extrapolation based on an average velocity computed on the N1 most recent first points PT1c. For instance, a next point PT2 may be computed such as:$nextPoint = lastPoint + meanVelocity$ where the "lastPoint" refers to the most recent one among the N1 most recent points PT1c and "meanVelocity" refers to the mean velocity of the N1 most recent first points PT1c.

In a displaying step S14 (**figures 4** and **7**), the computing device DV1 may display each third point PT1b and the N2 next points PT2 predicted by the stroke prediction of the dynamic prediction process S12. As shown in this example, the N2 next points PT2 are displayed so that they succeed to the third points PT1b (i.e. subsequently to the most recent third point PT1b). These N2 next points represent a prediction of points that are expected to be displayed subsequently to the N1 most recent points first PT1c.

In particular, the third points PT1b now on display may form a second stroke portion ST1b subsequent to (or as a continuation of) the first stroke ST1a formed by the second points PT1a. Additionally, the N2 next points PT2 may define a third stroke portion ST1c (figure 7) subsequent to (as a continuation of) the second stroke portion ST1b formed by the third points PT1b. In a particular example, the first stroke portion ST1a, second stroke portion ST1b and third stroke portion ST1c belong to a same stroke of digital ink displayed by the computing device DV1.

As shown in **figure 8** according to a particular example, the computing device DV1 may register new points PT3 (e.g. in parallel of displaying step S14) and, in a next refreshing phase of the display unit 4a, display the new points PT3 in replacement of the predicted next points N2. Once the real points PT3 actually inputted by the users UR1 are displayed, that there is no need to maintain on display the predicted next points PT2, so the latter can be removed to display a more accurate representation of the user's handwriting input HW.

By performing a stroke prediction, the problem of latency can be limited or avoided, as predicted points PT2 can be determined and displayed to improve the responsiveness of the device DV1. The number N2 of expected points PT2 can be adapted as a function of the computed confidence score CF to adjust the degree of stroke prediction depending on the level of confidence in predicting the next points.

The steps S2-S12 as shown in figure 4 may be repeated iteratively while the user's handwriting HW is being registered by the computing device DV1, that is, all along the user's process of handwriting. While the user UR1 inputs new first points PT1, the processing method is being carried out to adaptively control store prediction, thereby generating stroke prediction only when necessary and at the appropriate degree of accuracy.

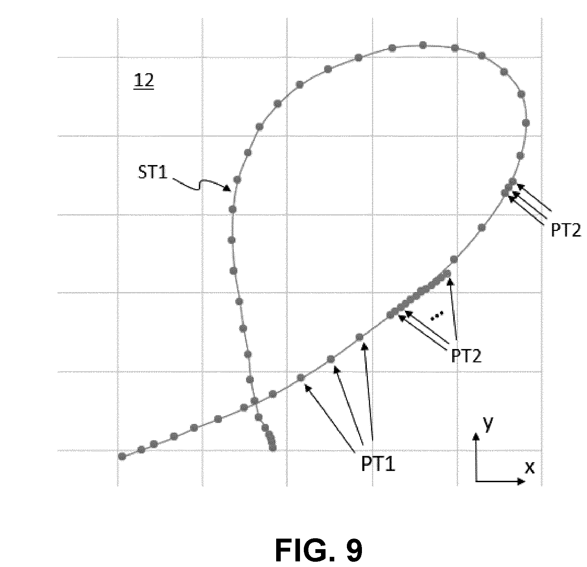

**Figure 9** schematically shows the entire stroke ST1 and next points PT2 that are predicted and displayed at different positions of the stroke ST1 according to the processing method while the user's handwriting HW is being registered by the computing device DV1.

In a particular example, the dynamic prediction process 15 is performed (S12, figure 4) such that, if N2 = 0 (minimum value), stroke prediction is deactivated (or disabled, or blocked) so that no next point PT2 is predicted based on features of the N1 most recent first points PT1c. In other words, no stroke prediction is performed if N2 equals to zero, thereby saving resources and avoiding occurrence of prediction errors that may be perceptible to the user. Stroke prediction can thus be selectively disabled in case of a curved, or highly curved, motion as it is considered to be more beneficial in such cases to avoid errors that may be caused by point prediction.

The curvature of the N1 most recent first points PT1c, and thus the curvature score SC1 computed in S8 (figure 4), provides useful information on the degree of visibility that the user UR1 has on the display unit 4b during the process of handwriting. This curvature provides an indication as to whether the user UR1 can or cannot see what he/she is handwriting. A highly curved gesture suggests that the user UR1 has a reduced visibility on what is being displayed while, conversely, a lowly curved gesture (e.g. a straight motion) suggests a relatively good visibility of the user on the display. The curvature score SC1 thus reflects a likelihood that the user UR1 will notice a gap 16 (figure 5) during the process of handwriting. The higher the curvature score is, the lower are the chance that the user UR1 will notice a problem of latency as the user's hand or input instrument 14 is likely to hide a region, in a vicinity of the current input position PS1, where such errors may appear. Accordingly, in case of a curved, or highly curved, handwriting input, stroke prediction can be limited or deactivated.

As already discussed, a conventional prediction algorithm may introduce various errors, such as artifacts (where points appear unexpectedly on the screen), overshoots (where the predicted ink extends beyond the user's actual input position, thus because of an over-anticipation of the prediction algorithm which results in predicting points too far ahead of the actual user's input), wrong orientation compared to the input potion, jitter (trembling around the finger location), jumps (jumping away from the finger at times), spring effect (yo-yo effect around the finger), etc.. These inaccuracies and errors may vary depending on various factors, such as the user's handwriting style, and thus negatively impact the user experience. In particular, the performance of a prediction algorithm in terms of stability and spatial accuracy varies widely depending on the user's unique handwriting style.

Thanks to the processing method and corresponding device, handwriting display can be rendered more responsive and accurate, regardless of the resources (hardware/software) and capabilities of the device in use. By dynamically controlling a prediction process, stroke prediction can be performed in an accurate and reliable manner (in particular with more stability and spatial accuracy), thereby offering a smoother and more efficient experience to the user. Stroke prediction may be adapted, or even disabled, in a dynamic manner to achieve a good trade-off between ensuring a good responsiveness of the system while limiting errors and resource consumption causes by stroke prediction, to guarantee an improved user experience irrespective of the computing device in use. Errors and negative side-effects due to stroke prediction, such as occurrence of artefacts or overshoots on the display, may be mitigated or avoided.

In particular, the problem of latency can be advantageously reduced or eliminated for any computing devices used for inputting and displaying handwriting input. It is possible to only activate stroke prediction when accurate enough and when it matters the most for user experience. It is also possible to adapt the degree of stroke prediction (number N2 of predicted next points PT2) depending on the need for prediction accuracy and reliability.

In a particular example, if the curvature reaches a minimum threshold value or below (e.g. 0,05), then the curvature score SC1 is set to a maximum value (e.g. SC1 = 1), thereby causing stroke prediction as part of the dynamic control process 15.

In a particular example, if the curvature reaches a maximum threshold TH1 or above (e.g. 0,1), then the curvature score SC1 is set to a minimum value SC1min (e.g. SC1min = 0), thereby limited or deactivating stroke prediction in the dynamic prediction process 15. For instance, stroke prediction is deactivated by setting the integer N2 so that N2 = 0 if SC1 = SC1min. It is thus possible to efficiently control the way stroke prediction is performed.

For instance, the confidence score CF can be set so that CF = 0 (minimum value) if the curvature score SC1 indicates that the N1 most recent first points PT1c define a curve (i.e. a non-straight motion), thereby causing the computing device DV1 to disable stroke prediction as part of the dynamic prediction process 15. In other words, stroke prediction can be disabled on curves.

Stroke prediction can be advantageously limited, or even disabled, in case a curved, or highly curved, motion is detected by the computing device DV1, without affecting user experience, so that inaccurate stroke prediction can be avoided. Since the user UR1 is less likely to notice a problem of latency, stroke prediction is adaptively limited or even deactivated to avoid occurrence of prediction errors (artefacts, etc.) that may be perceptible to the user UR1, thereby also saving processing resources.

In a particular example, the confidence score CF is computed (S8, figure 4) based on the curvature score SC1 in combination with at least one of a speed score SC2 and an acceleration score SC3 (i.e. in combination with any of the two, or in combination with both). These speed and acceleration scores SC2 and SC3 may be computed in step S8 based on features of the N1 most recent first points PT1c, such as the relative positions of these points PT1c and associated timestamps as defined in the point data PT1c.

The speed score SC2 is representative of a speed of the motion events defined by the N1 most recent first points PT1c. The acceleration score SC3 is representative of an acceleration of the motion events defined by the N1 most recent first points PT1c. Likewise to the curvature score SC1, the speed score SC2 and acceleration score SC3 can be factors normalised to exhibit a respective value comprised between respective minimum and maximum values such as 0 and 1, although other variants are possible.

The speed score SC2 and the acceleration score SC3 may be computed in various ways, for instance in an analogous to the calculation (S8) of the curvature score SC1 as described in the present disclosure.

In a particular example, a single speed value is computed (S8) based on the relative positions and timestamps of the N1 most recent first points PT1c (all or only part thereof). A new speed value may be computed iteratively at each refresh rate while the handwriting HW is being registered.

In a particular example, a single acceleration value is computed (S8) based on the relative positions and timestamps of the N1 most recent first points PT1c (all or only part thereof). A new acceleration value may be computed iteratively at each refresh rate while the handwriting HW is being registered.

In a particular example, the confidence score CF is computed (S8, figure 4) based on a product of the curvature score SC1 and the speed score SC2 (e.g. CF = SC1 * SC2).

In a particular example, the confidence score CF is computed (S8, figure 4) based on a product of the curvature score SC1 and the acceleration score SC3 (e.g. CF = SC1*SC3).

In a particular example, the confidence score CF is computed (S8, figure 4) based on a product of the curvature score SC1, the speed score SC2 and the acceleration score SC3 (e.g. CF = SC1*SC2*SC3).

By taking into account the curvature score SC1, the speed score SC2 and/or the acceleration score SC3 in combination, the dynamic prediction process 15 can be adapted efficiently to achieve a good trade-off between ensuring a good responsiveness of the system while limiting errors due to stroke prediction, to guarantee an improved user experience irrespective of the computing device in use.

Stroke prediction can be controlled dynamically with limited resources. In particular, it is possible to only activate stroke prediction when accurate enough and when it matters the most for user experience.

In a particular example, the speed score SC2 is positively correlated to the confidence score CF so that the higher speed score SC2, the higher the confidence score CF, and conversely. The confidence score CF may for instance be proportional to the speed score SC2.

In a particular example, if the speed equals to a second threshold value TH2 or less, the speed score SC2 is set (S8, figure 4) to a minimum value SC2min (e.g. SC2min = 0), thereby limiting or deactivating stroke prediction in the dynamic prediction process 15. For instance, stroke prediction is deactivated by setting the integer N2 so that N2 = 0 if SC2 = SC2min. Stroke prediction can thus be advantageously limited (by reducing the number N2 of predicted next points PT2), or even deactivated (no next point prediction), on relatively slow motion to avoid trajectory shakiness, thereby improving even further the user experience.

In a particular example, the acceleration score SC3 is negatively correlated to the confidence score CF so that the higher acceleration score SC3, the lower the confidence score CF, and conversely. The confidence score CF may for instance be inversely proportional to the acceleration score SC3.

In a particular example, if the acceleration equals to a third threshold value TH3 or more, the acceleration score SC3 is set (S8, figure 4) to a minimum value SC3min (e.g. SC3min = 0), thereby limiting or deactivating stroke prediction in the dynamic prediction process 15. For instance, stroke prediction is deactivated by setting the integer N2 so that N2 = 0 if SC3 = SC3min. Stroke prediction can thus be advantageously limited (by reducing the number N2 of predicted next points PT2), or even deactivated (no next point PT2), on relatively fast accelerating motion to avoid trajectory overshoot, thereby improving even further the user experience. In case of a fast-accelerating motion, it can be considered that the difficultly to predict what the user is handwriting is too high, such that stroke prediction is disabled to avoid prediction errors such as overshooting that can significantly degrade the overall quality of rendering of the handwriting input on display. An average person can write only according to a given acceleration. If acceleration exceeds that threshold, it is considered to be better to avoid stroke prediction. Beyond that threshold, it is probably not handwriting but something else (e.g. scratching).

In a particular example, in the setting step S10 (figure S12), the integer N2 is set such that: N2 = round (PT / SR) * CF
where SR is a sampling rate of the display unit 4b, PT is a prediction target and CF is the confidence score.

While not explicitly described, the present embodiments may be employed in any combination or sub-combination thereof. This disclosure having been described in particular embodiments, it is clear that it is susceptible to numerous modifications and embodiments are possible within the scope defined by the scope of the following claims.

## Claims

1. A method implemented by a computing device (DV1) for processing handwriting (HW) comprising strokes (ST) of digital ink, each stroke comprising at least one point (PT), said method comprising:
- registering (S2) of a plurality of first points (PT1) as motion events;
- displaying (S4), as a first stroke portion (ST1a), second points (PT1a) comprising at least part of the registered first points while at least one other registered first point (PT1b), so-called third point, is not yet displayed due to latency between said registering and displaying;
- determining (S6) an integer N1 of the most recent first points (PT1c) registered over a predetermined time window (WD1), said most recent first points comprising at least one displayed second point (PT1a) and at least one non-displayed third point (PT1b);
- computing (S8) a confidence score (CF) based at least on a curvature score (SC1) representative of a curvature of the N1 most recent first points;
- setting (S10), based on the confidence score (CF), an integer N2 defining a prediction window; and
- controlling (S12) a dynamic prediction process (15) as a function of the integer N2, comprising:
∘ if N2 ≥ 1, predicting as a stroke prediction, based on features of the N1 most recent first points (PT1c), N2 next points (PT2) that are expected to be displayed subsequently to the N1 most recent first points.

2. The method of claim 1, further comprising:
- displaying a second stroke portion (ST1c) defined by the predicted N2 next points (PT2).

3. The method of claim 1 or 2, wherein said controlling the prediction process further comprises:
- if N2 = 0, deactivating stroke prediction so that no next point (PT2) is predicted based on features of the N1 most recent first points.

4. The method of any one the preceding claims, wherein the computing of the confidence score comprises:
- determining the curvature based on respective positions of the N1 most recent first points (PT1c); and
- setting the curvature score (SC1) to reflect said curvature so that the curvature score is inversely correlated to the curvature.

5. The method of claim 4, wherein the curvature score (SC1) is set with a predetermined range value, the curvature score being inversely proportional to the curvature.

6. The method any one the preceding claims, wherein the computing of the confidence score comprises:
- if the curvature reaches a first threshold value (TH1) or more, the curvature score (SC1) is set to a minimum value (SC1min), thereby limiting or deactivating stroke prediction in the dynamic prediction process.

7. The method of any one of the preceding claims, wherein the confidence score is computed based on the curvature score in combination with at least one of:
- a speed score (SC2) representative of a speed of the motion events defined by the N1 most recent first points; and
- an acceleration score (SC3) representative of an acceleration of the motion events defined by the N1 most recent first points.

8. The method of claim 7, wherein the confidence score (CF) is computed based on a product of the curvature score (SC1) with at least one of the speed score (SC2) and the acceleration score (SC3).

9. The method of claim 7 or 8, wherein the computing of the confidence score comprises:
- if the speed equals to a second threshold value (TH2) or less, the speed score (SC2) is set to a minimum value (SC2min), thereby limiting or deactivating stroke prediction in the dynamic prediction process.

10. The method of any one of claims 7 to 9, wherein the computing of the confidence score comprises:
- if the acceleration equals to a third threshold value (TH3) or more, the acceleration score (SC3) is set to a minimum value (SC3min), thereby limiting or deactivating stroke prediction in the dynamic prediction process.

11. The method of any one of the preceding claims wherein, in the stroke prediction of the dynamic prediction process (15), the N2 next points are predicted by an extrapolation based on the N1 most recent first points (PT1c).

12. The method of claim 11, wherein the extrapolation is a linear extrapolation based on an average velocity computed on the N1 most recent first points.

13. A computer program (PG1) including instructions for executing the steps of a method for processing handwriting according to any one of the preceding claims when said program is executed by a computer (DV1).

14. A computing device (DV1) for processing handwriting (HW) comprising strokes (ST) of digital ink, each stroke comprising at least one point (PT), said device comprising:
- a registering module (MD2) for registering a plurality of first points (PT1) as motion events;
- a displaying module (MD4) for displaying, as a first stroke portion (ST1a), second points (PT1a) comprising at least part of the registered first points while at least one other registered first point (PT1b), so-called third point, is not yet displayed due to latency between said registering and displaying;
- a determining module (MD6) for determining an integer N1 of the most recent first points (PT1c) registered over a predetermined time window (WD1), said most recent first points comprising at least one displayed second point (PT1a) and at least one non-displayed third point (PT1b);
- a computing module (MD8) for computing a confidence score (CF) based at least on a curvature score (SC1) representative of a curvature of the N1 most recent first points;
- a setting module (MD10) for setting, based on the confidence score, an integer N2 defining a prediction window; and
- a prediction module (MD12) for controlling a dynamic prediction process (15) as a function of the integer N2, comprising:
if N2 ≥ 1, predicting as a stroke prediction, based on features of the N1 most recent first points (PT1c), N2 next points (PT2) that are expected to be displayed subsequently to the N1 most recent first points.

## Patentansprüche

1. Ein von einer Recheneinrichtung (DV1) implementiertes Verfahren zur Verarbeitung von Handschrift (HW), die Striche (ST) digitaler Tinte umfasst, wobei jeder Strich mindestens einen Punkt (PT) umfasst, wobei das Verfahren umfasst:
- das Registrieren (S2) einer Vielzahl von ersten Punkten (PT1) als Bewegungsereignisse;
- Anzeigen (S4) von zweiten Punkten (PT1a), die zumindest einen Teil der registrierten ersten Punkte umfassen, als ersten Strichabschnitt (ST1a), während zumindest ein weiterer registrierter erster Punkt (PT1b), der sogenannte dritte Punkt, aufgrund einer Latenzzeit zwischen der Registrierung und der Anzeige noch nicht angezeigt wird;
- Ermitteln (S6) einer ganzen Zahl N1 der jüngsten ersten Punkte (PT1c), die über ein vorbestimmtes Zeitfenster (WD1) registriert wurden, wobei die jüngsten ersten Punkte mindestens einen angezeigten zweiten Punkt (PT1a) und mindestens einen nicht angezeigten dritten Punkt (PT1b) umfassen;
- Berechnen (S8) eines Konfidenzwerts (CF) auf der Grundlage zumindest eines Krümmungswerts (SC1), der für die Krümmung der N1 jüngsten ersten Punkte repräsentativ ist;
- Festlegen (S10) einer ganzen Zahl N2, die ein Vorhersagefenster definiert, auf der Grundlage des Konfidenzwerts (CF); und
- Steuern (S12) eines dynamischen Vorhersageprozesses (15) in Abhängigkeit von der ganzen Zahl N2, umfassend:
∘ wenn N2 ≥ 1 ist, das Vorhersagen als Strichvorhersage auf der Grundlage von Merkmalen der N1 jüngsten ersten Punkte (PT1c) von N2 nächsten Punkten (PT2), von denen erwartet wird, dass sie im Anschluss an die N1 jüngsten ersten Punkte angezeigt werden.

2. Verfahren nach Anspruch 1, ferner umfassend:
- Anzeigen eines zweiten Strichabschnitts (ST1c), der durch die vorhergesagten N2 nächsten Punkte (PT2) definiert ist.

3. Verfahren nach Anspruch 1 oder 2, wobei das Steuern des Vorhersageprozesses ferner umfasst:
- wenn N2 = 0 ist, das Deaktivieren der Strichvorhersage, sodass kein nächster Punkt (PT2) auf der Grundlage von Merkmalen der N1 jüngsten ersten Punkte vorhergesagt wird.

4. Verfahren nach einem der vorstehenden Ansprüche, wobei die Berechnung des Konfidenzwerts umfasst:
- Ermitteln der Krümmung auf der Grundlage der jeweiligen Positionen der N1 jüngsten ersten Punkte (PT1c); und
- Festlegen des Krümmungswerts (SC1) zur Wiedergabe der Krümmung, sodass der Krümmungswert invers mit der Krümmung korreliert ist.

5. Verfahren nach Anspruch 4, wobei der Krümmungswert (SC1) auf einen vorbestimmten Bereichswert festgelegt wird, wobei der Krümmungswert umgekehrt proportional zur Krümmung ist.

6. Verfahren nach einem der vorstehenden Ansprüche, wobei die Berechnung des Konfidenzwerts umfasst:
- wenn die Krümmung einen ersten Schwellenwert (TH1) oder mehr erreicht, wird der Krümmungswert (SC1) auf einen Minimalwert (SC1min) gesetzt, wodurch die Strichvorhersage im dynamischen Vorhersageprozess eingeschränkt oder deaktiviert wird.

7. Verfahren nach einem der vorstehenden Ansprüche, wobei der Konfidenzwert auf der Grundlage des Krümmungswerts in Kombination mit mindestens einem der folgenden Werte berechnet wird:
- einen Geschwindigkeitswert (SC2), der eine Geschwindigkeit der durch die N1 jüngsten ersten Punkte definierten Bewegungsereignisse angibt; und
- einen Beschleunigungswert (SC3), der eine Beschleunigung der Bewegungsereignisse repräsentiert, die durch die N1 jüngsten ersten Punkte definiert sind.

8. Verfahren nach Anspruch 7, wobei der Konfidenzwert (CF) auf der Grundlage eines Produkts aus dem Krümmungswert (SC1) und mindestens einem der Werte aus dem Geschwindigkeitswert (SC2) und dem Beschleunigungswert (SC3) berechnet wird.

9. Verfahren nach Anspruch 7 oder 8, wobei die Berechnung des Konfidenzwerts umfasst:
- wenn die Geschwindigkeit einem zweiten Schwellenwert (TH2) oder weniger entspricht, wird der Geschwindigkeitswert (SC2) auf einen Minimalwert (SC2min) gesetzt, wodurch die Strichvorhersage im dynamischen Vorhersageprozess eingeschränkt oder deaktiviert wird.

10. Verfahren nach einem der Ansprüche 7 bis 9, wobei die Berechnung des Konfidenzwerts umfasst:
- wenn die Beschleunigung einem dritten Schwellenwert (TH3) oder mehr entspricht, wird der Beschleunigungswert (SC3) auf einen Minimalwert (SC3min) gesetzt, wodurch die Strichvorhersage im dynamischen Vorhersageprozess eingeschränkt oder deaktiviert wird.

11. Verfahren nach einem der vorstehenden Ansprüche, wobei bei der Strichvorhersage des dynamischen Vorhersageprozesses (15) die N2 nächsten Punkte durch eine Extrapolation basierend auf den N1 jüngsten ersten Punkten (PT1c) vorhergesagt werden.

12. Verfahren nach Anspruch 11, wobei die Extrapolation eine lineare Extrapolation auf der Grundlage einer aus den N1 jüngsten ersten Punkten berechneten Durchschnittsgeschwindigkeit ist.

13. Ein Computerprogramm (PG1) mit Anweisungen zur Ausführung der Schritte eines Verfahrens zur Verarbeitung von Handschrift gemäß einem der vorstehenden Ansprüche, wenn das Programm von einem Computer (DV1) ausgeführt wird.

14. Eine Recheneinrichtung (DV1) zur Verarbeitung von Handschrift (HW), die Striche (ST) digitaler Tinte umfasst, wobei jeder Strich mindestens einen Punkt (PT) umfasst, wobei die Recheneinrichtung umfasst:
- ein Registrierungsmodul (MD2) zum Registrieren einer Vielzahl von ersten Punkten (PT1) als Bewegungsereignisse;
- ein Anzeigemodul (MD4) zum Anzeigen von zweiten Punkten (PT1a), die zumindest einen Teil der registrierten ersten Punkte umfassen, als ersten Strichabschnitt (ST1a), während zumindest ein weiterer registrierter erster Punkt (PT1b), der sogenannte dritte Punkt, aufgrund einer Latenzzeit zwischen der Registrierung und der Anzeige noch nicht angezeigt wird;
- ein Bestimmungsmodul (MD6) zum Bestimmen einer ganzen Zahl N1 der jüngsten ersten Punkte (PT1c), die über ein vorbestimmtes Zeitfenster (WD1) registriert wurden, wobei die jüngsten ersten Punkte mindestens einen angezeigten zweiten Punkt (PT1a) und mindestens einen nicht angezeigten dritten Punkt (PT1b) umfassen;
- ein Berechnungsmodul (MD8) zur Berechnung eines Konfidenzwerts (CF) auf der Grundlage zumindest eines Krümmungswerts (SC1), der die Krümmung der N1 jüngsten ersten Punkte widerspiegelt;
- ein Einstellungsmodul (MD10) zum Festlegen einer ganzen Zahl N2, die ein Vorhersagefenster definiert, auf der Grundlage des Konfidenzwerts; und
- ein Vorhersagemodul (MD12) zur Steuerung eines dynamischen Vorhersageprozesses (15) in Abhängigkeit von der ganzen Zahl N2, das Folgendes umfasst:
wenn N2 ≥ 1 ist, die Vorhersage - als Strichvorhersage - auf der Grundlage von Merkmalen der N1 jüngsten ersten Punkte (PT1c) der N2 nächsten Punkte (PT2), von denen erwartet wird, dass sie im Anschluss an die N1 jüngsten ersten Punkte angezeigt werden.

## Revendications

1. Procédé mis en œuvre par un dispositif informatique (DV1) pour traiter une écriture manuscrite (HW) comprenant des traits (ST) d'encre numérique, chaque trait comprenant au moins un point (PT), ledit procédé comprenant :
- l'enregistrement (S2) d'une pluralité de premiers points (PT1) en tant qu'événements de mouvement ;
- l'affichage (S4), en tant que première partie de trait (ST1a), de seconds points (PT1a) comprenant au moins une partie des premiers points enregistrés, tandis qu'au moins un autre premier point enregistré (PT1b), dit « troisième point », n'est pas encore affiché en raison d'un temps de latence entre ledit enregistrement et ledit affichage ;
- la détermination (S6) d'un nombre entier N1 de premiers points (PT1c) les plus récents enregistrés sur une fenêtre temporelle prédéterminée (WD1), lesdits premiers points les plus récents comprenant au moins un deuxième point affiché (PT1a) et au moins un troisième point non affiché (PT1b) ;
- calculer (S8) un score de confiance (CF) basé au moins sur un score de courbure (SC1) représentatif d'une courbure des N1 premiers points les plus récents ;
- définir (S10), sur la base du score de confiance (CF), un nombre entier N2 définissant une fenêtre de prédiction ; et
- commander (S12) un processus de prédiction dynamique (15) en fonction de l'entier N2, comprenant :
∘ si N2 ≥ 1, la prédiction, en tant que prédiction de trait, sur la base des caractéristiques des N1 premiers points les plus récents (PT1c), des N2 points suivants (PT2) qui devraient s'afficher à la suite des N1 premiers points les plus récents.

2. Procédé selon la revendication 1, comprenant en outre :
- l'affichage d'une deuxième partie de trait (ST1c) définie par les N2 points suivants prédits (PT2).

3. Procédé selon la revendication 1 ou 2, dans lequel ladite commande du processus de prédiction comprend en outre :
- si N2 = 0, la désactivation de la prédiction de trait de manière à ce qu'aucun point suivant (PT2) ne soit prédit sur la base des caractéristiques des N1 premiers points les plus récents.

4. Procédé selon l'une quelconque des revendications précédentes, dans lequel le calcul du score de confiance comprend :
- la détermination de la courbure sur la base des positions respectives des N1 premiers points les plus récents (PT1c) ; et
- la définition du score de courbure (SC1) de manière à refléter ladite courbure, de sorte que le score de courbure soit inversement corrélé à la courbure.

5. Procédé selon la revendication 4, dans lequel le score de courbure (SC1) est défini selon une plage de valeurs prédéterminée, le score de courbure étant inversement proportionnel à la courbure.

6. Procédé selon l'une quelconque des revendications précédentes, dans lequel le calcul du score de confiance comprend :
- si la courbure atteint une première valeur seuil (TH1) ou plus, le score de courbure (SC1) est défini à une valeur minimale (SC1min), limitant ou désactivant ainsi la prédiction de trait dans le processus de prédiction dynamique.

7. Procédé selon l'une quelconque des revendications précédentes, dans lequel le score de confiance est calculé sur la base du score de courbure, en combinaison avec au moins l'un des éléments suivants :
- un score de vitesse (SC2) représentatif d'une vitesse des événements de mouvement définis par les N1 premiers points les plus récents ; et
- un score d'accélération (SC3) représentatif d'une accélération des événements de mouvement définis par les N1 premiers points les plus récents.

8. Procédé selon la revendication 7, dans lequel le score de confiance (CF) est calculé sur la base du produit du score de courbure (SC1) par au moins l'un parmi le score de vitesse (SC2) et le score d'accélération (SC3).

9. Procédé selon la revendication 7 ou 8, dans lequel le calcul du score de confiance comprend :
- si la vitesse est égale à une deuxième valeur seuil (TH2) ou inférieure, le score de vitesse (SC2) est fixé à une valeur minimale (SC2min), limitant ou désactivant ainsi la prédiction de trait dans le processus de prédiction dynamique.

10. Procédé selon l'une quelconque des revendications 7 à 9, dans lequel le calcul du score de confiance comprend :
- si l'accélération est égale ou supérieure à une troisième valeur seuil (TH3), le score d'accélération (SC3) est fixé à une valeur minimale (SC3min), ce qui limite ou désactive la prédiction de trait dans le processus de prédiction dynamique.

11. Procédé selon l'une quelconque des revendications précédentes, dans lequel, lors de la prédiction de trait du processus de prédiction dynamique (15), les N2 points suivants sont prédits par une extrapolation basée sur les N1 premiers points les plus récents (PT1c).

12. Procédé selon la revendication 11, dans lequel l'extrapolation est une extrapolation linéaire basée sur une vitesse moyenne calculée à partir des N1 premiers points les plus récents.

13. Programme informatique (PG1) comprenant des instructions pour exécuter les étapes d'un procédé de traitement de l'écriture manuscrite selon l'une quelconque des revendications précédentes, lorsque ledit programme est exécuté par un ordinateur (DV1).

14. Dispositif informatique (DV1) destiné au traitement de l'écriture manuscrite (HW) comprenant des traits (ST) d'encre numérique, chaque trait comprenant au moins un point (PT), ledit dispositif comprenant :
- un module d'enregistrement (MD2) destiné à enregistrer une pluralité de premiers points (PT1) en tant qu'événements de mouvement ;
- un module d'affichage (MD4) destiné à afficher, en tant que première partie de trait (ST1a), des seconds points (PT1a) comprenant au moins une partie des premiers points enregistrés, tandis qu'au moins un autre premier point enregistré (PT1b), dit « troisième point », n'est pas encore affiché en raison d'un temps de latence entre ledit enregistrement et ledit affichage ;
- un module de détermination (MD6) destiné à déterminer un nombre entier N1 de premiers points (PT1c) les plus récents enregistrés au cours d'une fenêtre temporelle prédéterminée (WD1), lesdits premiers points les plus récents comprenant au moins un deuxième point affiché (PT1a) et au moins un troisième point non affiché (PT1b) ;
- un module de calcul (MD8) destiné à calculer un score de confiance (CF) sur la base, au moins, d'un score de courbure (SC1) représentatif de la courbure des N1 premiers points les plus récents ;
- un module de paramétrage (MD10) destiné à définir, sur la base du score de confiance, un nombre entier N2 définissant une fenêtre de prédiction ; et
- un module de prédiction (MD12) destiné à commander un processus de prédiction dynamique (15) en fonction de l'entier N2, comprenant :
si N2 ≥ 1, la prédiction, en tant que prédiction de trait, sur la base des caractéristiques des N1 premiers points les plus récents (PT1c), des N2 points suivants (PT2) qui devraient s'afficher à la suite des N1 premiers points les plus récents.
